## Europäisches Patentamt
## European Patent Office
## Office européen des brevets

(19)

(11) Publication number: **0 140 563**
**B1**

# EUROPEAN PATENT SPECIFICATION

(45) Date of publication of the patent specification:
**29.04.87**

(51) Int. Cl.⁴: **C 02 F 1/20, B 01 D 19/00**

(21) Application number: **84306367.8**

(22) Date of filling: **18.09.84**

(54) **Process for removal of dissolved oxygen from an aqueous medium used in steam generation systems.**

(30) Priority: **19.09.83 US 533185**

(43) Date of publication of application:
**08.05.85 Bulletin 85/19**

(45) Publication of the grant of the patent:
**29.04.87 Bulletin 87/18**

(84) Designated Contracting States:
**BE DE FR GB IT SE**

(56) References cited:
**DE-A-3 137 053**

(73) Proprietor: **WESTINGHOUSE ELECTRIC
CORPORATION, Westinghouse Building Gateway
Center, Pittsburgh Pennsylvania 15235 (US)**

(72) Inventor: **Lorentz, Donald Grant, 186 Orchard
Drive RD No 2, Irwin Pennsylvania (US)**

(74) Representative: **van Berlyn, Ronald Gilbert, 23,
Centre Heights, London, NW3 6JG (GB)**

## Description

This invention relates to a process for removing dissolved oxygen from an aqueous medium used in a steam generation system.

In various systems, such as in boiler systems for energy production or other heater systems, an aqueous medium is recirculated that eventually picks up unwanted oxygen, the oxygen becoming dissolved in the aqueous medium.

The presence of dissolved oxygen in such an aqueous medium has a corrosive effect on the downstream components of the system, such as in feedwater heaters and steam generators. Often, such oxygen finds its way into the aqueous medium through the condenser contained in such systems, due to the differential pressure that exists between the atmosphere and the subatmospheric pressure inside the condenser. In high pressure boiler systems, oxygen removal has been performed by hydrazine dosing of the feedwater to the boiler.

The use of hydrazine as an oxygen scavenger, for dissolved oxygen in water, is known. The hydrazine is said to combine with dissolved oxygen in such systems according to the equation: $N_2H_4 + O_2 \rightarrow H_2 + 2H_2O$. In U.S. Patent Specification No. 3,551,349, the addition of an aqueous hydrazine-quinone mixture is suggested for corrosion protection. The addition of chemical activators or catalysts to aqueous hydrazine, in order to increase the rate of removal of dissolved oxygen from aqueous systems, is preferred. As examples of such catalysts, U.S. Patent Specification No. 3,808,138 teaches the use of a cobalt maleic acid hydrazide with hydrazine; U.S. Patent Specification No. 3,843,547 teaches the use of a mixture of an arylamine compound and a quinone compound with hydrazine; and U.S. Patent Specification No. 4,142,500 teaches the use of nitro- or amino-substituted phenols or cresols with hydrazine to increase the rate of dissolved oxygen removal. While in some instances the additive may be designated a catalyst and in other instances as an activator, the purpose of such additives is to improve the rate of removal of dissolved oxygen from systems using hydrazine. This is due to a problem that is associated with use of hydrazine as an oxygen scavenger, in that it has low reaction rates at typical condenser temperatures of from 26.7°C-54.4°C (80°-130°F). In attempting to solve the problem by use of additives, however, there is the further problem of the nature of such additives and associated decomposition products and their impact on steam generator materials.

As described by S.R.M. Ellis and C. Moreland in Proceedings of the International Conference on Hydrazine and Water Treatment (Bournemouth, England), May 15-17, 1957, at pages 17 and 18, ultraviolet light has an accelerating effect on an oxygen-hydrazine reaction. The data presented however was conducted with oxygen saturated water (approximately 8 "ppm" = parts per million) and in a sodium phosphate water chemistry.

It is an object of the present invention to utilize the ultraviolet radiation catalyzing effect on hydrazine in a steam generation system at a location which will provide a speedy reaction and remove oxygen from aqueous medium recycled to the steam generator.

It is another object of the present invention to provide an oxygen-removal system using hydrazine which eliminates the need for chemical additives and the subsequent problems associated with such additives and decomposition products of such additives.

Accordingly, the present invention resides in a process for removing dissolved oxygen from an aqueous medium used in a steam generation system including a steam generator, a condenser having a hotwell, and recycle lines therebetween, and wherein hydrazine is added to the aqueous medium to react with said dissolved oxygen, characterized by adding said hydrazine to the aqueous medium, after passage through the steam generator and prior to passage thereof through the condenser, where condensate is formed and passes to the condenser hotwell, to provide contact between the hydrazine and dissolved oxygen in the aqueous medium; exposing the hydrazine-containing aqueous medium condensate formed in the condenser to ultraviolet light in the condenser hotwell for a period of time sufficient to effect removal of the dissolved oxygen by the hydrazine; and recycling the aqueous medium condensate for use in the steam generator.

The exposure to ultraviolet light is preferably effected by the use of ultraviolet lamps submerged in the liquid condensate collected in the hotwell, although exposure through the walls of the hotwell may also be used. The hydrazine-containing aqueous condensate may additionally be exposed to ultraviolet light in the condenser prior to passage of the condensate to the hotwell if exposure times are to be extended. The aqueous medium, generally at a pH of from 8.5 to 10.5 is exposed to the ultraviolet light for a time period of from 2-10 minutes, with an ultraviolet wavelength of from 250 nm-350 nm (2500-3500 Angstroms) being preferred.

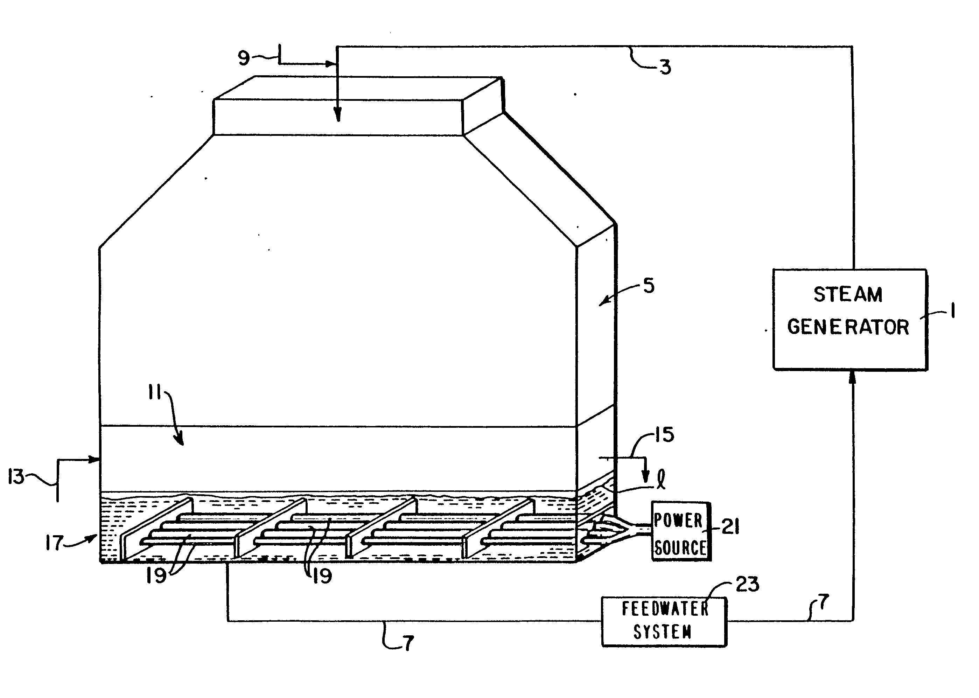

Referring now to the accompanying drawing, there is schematically illustrated a steam generator 1 provided with a recycle line 3 from the steam generator to a condenser 5, and a recycle line 7 from the condenser 5 back to the steam generator 1. An aqueous medium is circulated through the steam generator system, with the steam from the steam generator condensed in the condenser 5 to form a condensate.

An aqueous solution of hydrazine is added to the aqueous medium, by addition to the line 3, through line 9, between the discharge from the steam generator 1 and the condenser 5. As the hydrazine enters the condenser 5, the hydrazine, from line 9, is thoroughly mixed with the aqueous medium during the tortuous path through the condenser 5 and a residence time is achieved which provides for reaction of the hydrazine and dissolved oxygen in the aqueous medium.

The dissolved oxygen content of such aqueous media used in steam generation systems will normally be below a maximum of about 100 parts per billion, by weight, with most such systems having much lower oxygen contents, as low as 2 parts per billion. The amount of hydrazine added, on a molar basis should be in excess of that required to react with the oxygen, i.e., hydrazine should be added in excess of the 1:1 hydrazine/oxygen molar ratio theoretically required for reaction. Preferably, up to 150 parts per billion hydrazine in excess of that required to react with the dissolved oxygen in the aqueous medium is added.

The pH of the aqueous medium in such steam generation systems is generally basic, with a pH of from 8.5 to 10.5 being preferred.

In the condenser 5, which contains a heat exchange element, such as a cooling tube section 11, through which cooling water from line 13 is passed and discharged through line 15, the aqueous media, to which hydrazine has been added, is condensed and a condensate formed with is collected in a hotwell 17. The condensate formed in the condenser 5, which collects in the hotwell 17 will normally be at a temperature of from 26.7°C to 54.4°C (80° to 130°F), generally about 32.2°C (90°F), a temperature at which the reaction of hydrazine with dissolved oxygen in an aqueous medium is slow.

The condensate in the hotwell which contains hydrazine is exposed to ultraviolet light for a period of time sufficient to effect removal of the dissolved oxygen by the hydrazine. While the wavelength of the ultraviolet light may vary depending upon the conditions present in the system, such as residence time in the hotwell and amount of dissolved oxygen in the aqueous medium, the wavelength of the ultraviolet light should be from 10-400 nm (100-4000 Angstroms), with a wavelength from 250 nm-350nm (2500-3500) Angstroms being preferred.

As illustrated in the drawing, the ultraviolet light may be provided by a series of ultraviolet lamps 19 submerged in the condensate collected in the hotwell 17 (the condensate level, 1, shown in the drawing), the lamps contained within quartz outer tubes, or other protective means, and connected to a power source 21. As another embodiment, the lamps could be contained in the walls of the hotwell 17 and ultraviolet light exposed to the condensate in the hotwell through windows in the inner walls of the hotwell. If additional contact time with the ultraviolet light is required, additional lamps can be installed within the cooling tube section 11, which would effectively increase the time that dissolved hydrazine (in the condensate droplets) would be exposed to the ultraviolet radiation.

The contact time that is necessary between the ultraviolet light and the hydrazine is that which will effect the removal of dissolved oxygen from the condensate. Contact times on the order of two minutes should suffice, although longer contact time may be required in some instances. A contact time of from 2-10 minutes should be effected, in an aqueous medium of a pH of from 8.5-10.5 and having an excess of hydrazine to dissolved oxygen of less than 150 parts per billion.

The aqueous condensate from the condenser hotwell 17 is then passed through recycle line 7 to the steam generator. The recycle line 7, as indicated in the drawing will contain other components, such as a feedwater system 23, which would normally contain about six or more feedwater heaters, which will also be protected from oxygen attack due to removal of dissolved oxygen in the condenser hotwell.

With the use of the present process, an aqueous hydrazine solution can be used to remove dissolved oxygen, from the aqueous medium used in a steam generation system, without the addition of chemical additives or catalysts that could lead to decomposition products which may have a detrimental effect on the system. With the use of ultraviolet radiation exposure, the hydrazine will more readily react with oxygen in the condenser and will not be taken into the steam generator for thermal decomposition and for reduction of oxide at the high temperatures. Since hydrazine decomposition products include ammonia, hydrogen and nitrogen, and since high concentration of ammonia and hydrogen on a localized surface area could promote corrosion, such possible problems are also eliminated. In the present process, the oxygen is removed in the condenser, its primary source. Also, the use of the present process eliminates the need to add costly catalysts and eliminates the problems associated with the catalyst's decomposition products, and encourages a more efficient use of the hydrazine.

## Claims

1. A process for removing dissolved oxygen from an aqueous medium used in a steam generation system including a steam generator, a condenser having a hotwell, and recycle lines therebetween, and wherein hydrazine is added to the aqueous medium to react with said dissolved oxygen, characterized by adding said hydrazine to the aqueous medium, after passage through the steam generator and prior to passage thereof through the condenser, where condensate is formed and passes to the condenser hotwell, to provide contact between the hydrazine and dissolved oxygen in the aqueous medium; exposing the hydrazine-containing aqueous medium condensate formed in the condenser to ultraviolet light in the condenser hotwell for a period of time sufficient to effect removal of the dissolved oxygen by the hydrazine; and recycling the aqueous medium condensate for use in the steam generator.

2. A process according to claim 1, characterized in that the hydrazine-containing aqueous medium condensate is exposed to said ultraviolet light by the use of ultraviolet lamps submerged in condensate collected in the condenser hotwell.

3. A process according to claim 2, characterized in that the hydrazine-containing aqueous medium is also contacted with ultraviolet light in the condenser prior to collection in the condenser hotwell.

4. A process according to claim 1, characterized in that the hydrazine-containing aqueous medium condensate is exposed to ultraviolet light by lamps placed about the condenser hotwell walls.

5. A process according to claim 4, characterized in that the hydrazine-containing aqueous medium is also contacted with ultraviolet light in the condenser prior to collection in the condenser hotwell.

6. A process according to any of claims 1 to 5, characterized in that the hydrazine is added to the aqueous medium in an amount of up to 150 parts per billion in excess of that required to react with the dissolved oxygen in the aqueous medium.

7. A process according to any of claims 1 to 6, characterized in that the pH of the aqueous medium is from 8.5 to 10.5.

8. A process according to any of claims 1 to 7, characterized in that the aqueous medium condensate containing hydrazine is exposed to the ultraviolet light for a period of time of from 2-10 minutes.

9. A process according to any of claims 1 to 8, characterized in that the ultraviolet light has a wavelength of from 250 nm-350 nm (2500-3500) Angstroms.


**Patentansprüche**

1. Ein Verfahren zur Entfernung von gelöstem Sauerstoff aus einem wäßrigen Medium, angewandt in einem Dampfgenerationssystem, einschließlich einem Dampfgenerator, einem Kondensator mit einem Ausgußraum und dazwischen angeordneten Rückführungsleitungen, und wobei Hydrazin zu dem wäßrigen Medium zugefügt wird, um mit dem gelösten Sauerstoff zu reagieren, gekennzeichnet durch Hinzufügen des Hydrazins zu dem wäßrigen Medium nach Passage durch den Dampfgenerator und vor dessen Passage durch den Kondensator, wo Kondensat gebildet wird und zum Kondensatorausgußraum passiert, um zwischen dem Hydrazin und dem gelösten Sauerstoff in dem wäßrigen Medium Kontakt zu liefern; Aussetzen des Kondensats aus hydrazinhaltigem wäßrigen Medium, das in dem Kondensator gebildet wird, ultraviolettem Licht in dem Kondensatorausgußraum für eine Zeitperiode, die ausreicht, um eine Entfernung des gelösten Sauerstoffs durch das Hydrazin zu bewirken; und Rückführen des Kondensats aus wäßrigem Medium zur Nutzung in dem Dampfgenerator.

2. Ein Prozeß nach Anspruch 1, dadurch gekennzeichnet, daß das Kondensat aus hydrazinhaltigem wäßrigem Medium dem Ultraviolettlicht durch die Verwendung von Ultraviolettlampen ausgesetzt wird, die in Kondensat eingetaucht sind, welches in dem Kondensatorausgußraum gesammelt wird.

3. Ein Prozeß nach Anspruch 2, dadurch gekennzeichnet, daß das hydrazinhaltige wäßrige Medium auch vor dem Sammeln in dem Kondensatorausgußraum mit ultraviolettem Licht in dem Kondensator in Berührung gebracht wird.

4. Ein Prozeß nach Anspruch 1, dadurch gekennzeichnet, daß das Kondensat aus hydrazinhaltigem wäßrigen Medium ultraviolettem Licht durch Lampen ausgesetzt wird, die um die Kondensatorausgußraumwände herum angeordnet sind.

5. Ein Prozeß nach Anspruch 4, dadurch gekennzeichnet, daß das hydrazinhaltige wäßrige Medium auch mit ultraviolettem Licht in dem Kondensator vor dem Sammeln in dem Kondensatorausgußraum in Berührung gebracht wird.

6. Ein Prozeß nach einem der Ansprüche 1 bis 5, dadurch gekennzeichnet, daß das Hydrazin dem wäßrigen Medium in einer Menge von bis zu 150 Teilen pro Milliarde in Überschuß der Menge hinzugefügt wird, die notwendig ist, um mit dem gelösten Sauerstoff in dem wäßrigen Medium zu reagieren.

7. Ein Prozeß nach einem der Ansprüche 1 bis 6, dadurch gekennzeichnet, daß der pH-Wert des wäßrigen Mediums zwischen 8,5 und 10,5 liegt.

8. Ein Prozeß nach einem der Ansprüche 1 bis 7, dadurch gekennzeichnet, daß das Kondensat aus wäßrigem Medium, das Hydrazin enthält, dem Ultraviolettlicht für eine Zeitdauer von 2 bis 10 min ausgesetzt wird.

9. Ein Prozeß nach einem der Ansprüche 1 bis 8, dadurch gekennzeichnet, daß das Ultraviolettlicht eine Wellenlänge von 250 nm bis 350 nm (2500 - 3500 Å) aufweist.


**Revendications**

1°) Procédé pour l'extraction d'oxygène dissous d'un milieu aqueux, utilisé dans un système de génération de vapeur comprenant un générateur de vapeur (1), un condenseur (5) muni d'une source chaude et des conduites de recyclage (3-7) montées entre les deux, l'hydrazine étant ajoutée au milieu aqueux pour réagir avec l'oxygène dissous, procédé caractérisé en ce qu'il consiste à ajouter l'hydrazine au milieu aqueux après passage dans le générateur (1) de vapeur et avant passage dans le condenseur (5), ce qui permet d'obtenir un produit de condensation et de le faire passer dans la source chaude (17) du condenseur (5) pour réaliser le contact entre l'hydrazine et l'oxygène dissous dans le milieu aqueux; à exposer le produit de condensation du milieu aqueux contenant l'hydrazine, formé dans le condenseur, à de la lumière ultraviolette appliquée dans la source chaude (17) du condenseur pendant une période de temps suffisante pour produire l'extraction de l'oxygène dissous, par l'hydrazine; et à recycler le produit de condensation du milieu aqueux pour l'utiliser dans le générateur de vapeur (1).

2°) Procédé selon la revendication 1, caractérisé en ce que le produit de condensation du milieu auqeux contenant l'hydrazine est exposé à la lumière ultraviolette en utilisant des lampes ultraviolettes (19) immergées dans le produit de condensation collecté dans la source chaude (17) du condenseur.

3°) Procédé selon la revendication 2, caractérisé en ce que le milieu aqueux contenant l'hydrazine est également exposé a la lumière ultraviolette dans le condenseur avant d'être collecté dans la source chaude (17) de ce condenseur.

4°) Procédé selon la revendication 1, caractérisé en ce que le produit de condensation du milieu aqueux contenant l'hydrazine, est exposé à la lumière ultraviolette par des lampes (19') placées autour des parois de la source chaude du condenseur.

5°) Procédé selon la revendication 4, caractérisé en ce que le milieu aqueux contenant l'hydrazine est également exposé à la lumière ultraviolette dans le condenseur (5) avant d'être collecté dans la source chaude (17) du condenseur (5).

6°) Procédé selon l'une quelconque des revendications 1 à 5, caractérisé en ce que l'hydrazine est ajoutée au milieu aqueux en proportion pouvant dépasser d'une valeur atteignant 150 parties par billion la valeur nécessaire pour réagir avec l'oxygène dissous dans le milieu aqueux.

7°) Procédé selon l'une quelconque des revendications 1 à 6, caractérisé en ce que le pH du milieu aqueux est compris entre 8,5 et 10,5.

8°) Procédé selon l'une quelconque des revendications 1 à 7, caractérisé en ce que le produit de condensation du milieu aqueux contenant de l'hydrazine est exposé à la lumière ultraviolette pendant une période de temps comprise entre 2 et 10 minutes.

9°) Procédé selon l'une quelconque des revendications 1 à 8, caractérisé en ce que la lumière ultraviolette présente une longueur d'onde comprise entre 250 nm et 350 nm (2500 à 3 500 X $10^{-10}$m).

STEAM GENERATOR 1

POWER SOURCE 21

FEEDWATER SYSTEM 23

0 140 563